(19) Europäisches Patentamt
European Patent Office
Office européen des brevets

(11) Numéro de publication: **0 094 262**
**B1**

(12) **FASCICULE DE BREVET EUROPEEN**

(45) Date de publication du fascicule du brevet: **06.11.85**

(51) Int. Cl.⁴: **F 16 D 65/56**

(21) Numéro de dépôt: **83400413.7**

(22) Date de dépôt: **01.03.83**

(54) **Frein à rattrapage automatique d'usure.**

(30) Priorité: **21.04.82 FR 8206872**

(43) Date de publication de la demande: **16.11.83 Bulletin 83/46**

(45) Mention de la délivrance du brevet: **06.11.85 Bulletin 85/45**

(84) Etats contractants désignés: **AT BE CH DE GB IT LI LU NL SE**

(56) Documents cités:
**FR - A - 2 392 282**
**FR - A - 2 463 326**

(73) Titulaire: **MECANERAL, 129 bis, rue Armand Silvestre, F-92400 Courbevoie (FR)**

(72) Inventeur: **Resedat, Jacques, 23, avenue du Nantouillet, F-95590 Presles (FR)**

(74) Mandataire: **Martin, Jean-Jacques et al, Cabinet REGIMBEAU 26, Avenue Kléber, F-75116 Paris (FR)**

**EP 0 094 262 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne les freins pourvus d'un dispositif de rattrapage automatique de l'usure des garnitures de friction afin que la course de serrage et de desserage des garnitures n'augmente pas à mesure que les garnitures s'usent.

Plus précisément, l'invention sera décrite à titre d'exemple non limitatif à propos d'un frein à disque à commande électromagnétique, du type serré au repos et libéré par application d'un courant de commande (frein de sécurité), utilisé notamment pour assurer l'immobilisation de matériels lourds (grues, ponts roulants, etc.). Du fait de la commande électromagnétique, le rattrapage d'usure est pratiquement obligatoire car il faut garder dans l'électro-aimant un entrefer constant pour obtenir une force constante capable de vaincre la force de serrage au repos (force appliquée par des ressorts précomprimés).

La présente invention propose une construction simple permettant d'assurer un serrage d'un frein, notamment mais non exclusivement à disque et à commande électromagnétique, avec une force constante quelle que soit l'usure des garnitures en permettant de réaliser un rattrapage de l'usure par limitation de la course de desserrage des garnitures malgré l'usure de celles-ci lors d'un freinage, afin que la course de serrage lors du freinage suivant reste la même.

Dans son FR-A-2463326, la titulaire a déjà décrit un frein à commande électromagnétique offrant une telle possibilité de rattrapage automatique d'usure.

Ce frein à commande électromagnétique connu comprend au moins une garniture de friction susceptible de se déplacer par rapport au bâti du frein dans le sens d'un serrage ou d'un desserrage par rapport à une contrepartie de freinage, en pratique un disque de frein, sous l'action d'une came mobile à la rotation par rapport au bâti, autour d'un axe fixe par rapport à ce dernier; la came coopère avec la garniture de façon à provoquer par rotation dans un premier sens le serrage et par notation dans le deuxième sens le desserrage, et présente une forme telle que l'amplitude du mouvement de la garniture de friction soit porpotionnelle à l'amplitude du mouvement de rotation de la came quelle que soit la position initiale de celle-ci.

La liaison entre la came et les moyens prévus pour provoquer à volonté sa rotation dans un sens ou dans l'autre, en pratique constitués par un électro-aimant agissant dans le sens du desserrage lorsqu'il est excité, en contrepartie de moyens de rappel élastique tendant quant à eux à maintenir le serrage, est assurée par un dispositif de roue libre dont la partie menée est solidaire de la came à la rotation dans l'un et l'autre sens et dont la partie menante, bloquée sur la partie menée lorsqu'elle est entraînée par rapport à cette dernière dans ledit premier sens et libre par rapport à la partie menée dans le cas contraire, est reliée aux moyens d'actionnement aptes à lui imprimer un mouvement de rotation autour de l'axe, par rapport au bâti, avec une course angulaire supérieure à la course angulaire de prise de couple du dispositif de roue libre.

Dans le sens de blocage de la roue libre, correspondant au serrage du frein, le rappel de l'électro-aimant à son état de repos entraîne directement la came et agit sur la garniture de friction en transmettant par le roue libre toute la force de freinage appliquée par les moyens de rappel élastique de l'électro-aimant. Au contraire, lors du desserrage du frein, l'électro-aimant agit dans le sens libre de la roue libre et n'exerce donc qu'une très faible force d'entraînement en sens inverse sur la came, le desserrage de la garniture par rapport à sa contrepartie s'effectuant de lui-même dès lors que cesse l'action dans le sens du serrage. Le brevet français précité prévoit de limiter à un angle désiré le mouvement de rotation alors effectué par la came pour effectuer le rattrapage d'usure, en prévoyant une plaque montée à la rotation libre autour de l'axe de la came, et frottant contre la partie menée de la roue libre ou contre toute autre partie solidaire en rotation de la came avec une force de friction suffisante pour empêcher la rotation de la partie menée de la roue libre dans son sens libre et insuffisante pour empêcher la rotation de la partie menée dans son sens de blocage; la plaque coopère avec le bâti du frein par des butées espacées de manière que la plaque puisse tourner angulairement autour de l'axe au moins d'une distance correspondant à la course de rotation de came souhaitée pour assurer le desserrage du frein, et au plus d'une distance correspondant à la course de rotation maximale désirée pour la partie menante de la roue libre lors du déplacement de la tige de l'électro-amant, ce maximum étant déterminé pour limiter l'entrefer de l'électro-aimant à l'état serré du frein.

Il est apparu à l'usage que la plaque de friction ainsi prévue pour limiter le mouvement de rotation effectué par la came dans le sens du desserrage du frein constituait un moyen peu satisfaisant, du fait de la grande difficulté que l'on rencontrait à régler ses relations par friction avec les autres éléments du frein et du fait de la grande instabilité de ces relations par friction, liées à l'état de surface des pièces en contact, lequel peut varier considérablement avec le temps compte tenu des conditions d'environnement particulièrement difficiles dans lesquelles peuvent être amenés à travailler les freins du type concerné.

Le but de la présente invention est de remédier à ces inconvénients et, à cet effet, la présente invention propose des moyens de rattrapage de l'usure de la garniture de friction permettant de limiter, sans réglage initial complexe et de façon fiable, la course de rotation de la came au desserrage du frein.

A cet effet, dans un ensemble par ailleurs analogue à celui que décrit le brevet français précité, la présente invention propose de remplacer l'ensemble formé par la plaquette de friction et les butées limitant le débattement angulaire de celle-ci par un deuxième dispositif de roue libre dont la roue menante est solidaire de la came à la rotation dans un sens et dans l'autre et dont la roue menée est fixe par rapport au bâti du frein, la roue menante étant bloquée sur la roue menée lorsque la roue menante est entraînée à la rotation par rapport à la roue menée dans ledit deuxième sens, c'est-à-dire dans le sens de rotation de la came correspondant au desserrage, et libre par rapport à la roue menée dans le cas contraire, la course angulaire relative de prise de couple correspondant à au moins la course de rotation de la came souhaitée pour assurer le desserrage du frein et au plus la course angulaire de la partie menante de la première roue libre par rapport au bâti lors du fonctionnement des moyens d'actionnement.

Un tel dispositif ne demande aucun réglage et ne peut se dérégler, puisque la course angulaire de la partie menante du deuxième dispositif de roue libre par rapport à la partie menée de celui-ci correspondant à la prise de couple est un paramètre fixe du deuxième dispositif de roue libre; de plus, il est possible de placer ce dispositif, peu encombrant, totalement à l'abri des projections de liquides, de poussières, etc., provenant de l'environnement extérieur du frein, ce qui limite considérablement les risques de pannes.

D'autres caractéristiques et avantages de l'invention ressortiront de la description ci-dessous, relative à un mode de mise en œuvre non limitatif, et des dessins annexés qui font partie intégrante de cette description.

La fig. 1 représente un frein à disque selon l'invention, en coupe verticale partielle selon la ligne B-B de la fig. 2.

La fig. 2 représente une coupe verticale selon la ligne II-II de la fig. 1.

La fig. 3 représente une vue de dessus du frein.

La fig. 4 représente une coupe verticale selon la ligne IV-IV de la fig. 1.

Le frein à disque représenté aux figures comprend un bâti 10 portant de façon solidaire une armature ferromagnétique 16 d'un électro-aimant 12 comprenant par ailleurs un bobinage 14 fixe par rapport au bâti 10 et susceptible de coopérer avec une armature mobile 18, guidée à la translation selon un axe 11 par rapport à l'armature fixe 16, pour attirer cette armature 18 vers l'armature 16 lorsque le bobinage 14 de l'électro-aimant reçoit un courant par des bornes d'alimentation 20, et pour amener alors le frein à l'état de desserrage, illustré aux figures, comme il apparaîtra plus loin.

L'armature mobile 18 de l'électro-aimant 12 est fixée par boulonnage à une tige de commande 22, traversant le bobinage 14 et l'armature fixe 12 de part en part suivant l'axe 11 pour transmettre le mouvement de l'armature mobile 18 aux éléments mobiles assurant le freinage.

La tige 22 est guidée à la translation suivant l'axe 11 dans l'armature fixe 16 de l'électro-aimant 12 par l'intermédiaire d'une pièce en forme de manchon 26, filetée extérieurement et vissée dans un alésage taraudé de l'armature fixe 16; entre cette pièce 26 et l'armature mobile 18 est interposé un empilage de rondelles élastiques 24 rappelant l'armature mobile 18 en position écartée de l'armature 16, correspondant à l'état de serrage du frein, lorsque le bobinage 14 de l'électro-aimant 12 n'est pas alimenté en électricité; par vissage ou dévissage de la pièce 26 par rapport à l'armature fixe 16 de l'électro-aimant 12, on peut établir une précontrainte déterminée du ressort constitué par l'empilage des rondelles élastiques 24.

La valeur de l'entrefer existant entre l'armature mobile 18 et l'armature fixe 16 lorsque celles-ci sont ainsi écartées est limitée par exemple par des butées fixes ou élastiques; dans l'exemple illustré, un collier élastique 13 recouvrant à la fois une collerette de l'armature 16 et une collerette de l'armature 18 empêche leur éloignement relatif en translation suivant l'axe 11 au-delà d'une certaine valeur d'entrefer, et interdit la pénétration d'impuretés dans cet entrefer.

A l'opposé de sa zone boulonnée sur l'armature mobile 18 par rapport à la pièce 26, la tige de commande 22 est articulée, par une articulation 32 d'axe 15 perpendiculaire à l'axe 11, sur une biellette 30 elle-même articulée autour d'un axe 17 parallèle à l'axe 15, en 34, sur la partie menante 36 d'un dispositif de roue libre d'axe 19 parallèle aux axes 17 et 15 et fixe par rapport au bâti 10 de la machine; cette liaison entre la tige 22 et la partie menante 36 du dispositif de roue libre est assurée de telle sorte que le déplacement de la tige 22 à la translation suivant l'axe 11 par rapport à l'armature fixe 16 de l'électro-aimant 12 lorsque ce dernier est excité ou désexcité se traduise par une rotation de la partie menante 36 autour de son axe 19 par rapport au bâti 10.

La partie menée 40 du dispositif de roue libre est quant à elle solidaire, notamment à la rotation autour de l'axe 19, d'un arbre 38 monté à la rotation autour de l'axe 19 par rapport au bâti 10, l'arbre 38 étant cylindrique de révolution autour de cet axe.

Le sens de montage du dispositif de roue libre est tel que la partie menante 36 soit bloquée sur la partie menée 40 lorsqu'elle est entraînée à la rotation autour de l'axe 19 dans un sens 21 correspondant à l'éloignement de l'armature mobile 18 par rapport à l'armature fixe 16, c'est-à-dire à la désexcitation de l'électro-aimant 12, et libre à la rotation autour de l'axe 19 par rapport à la partie menée 40 dans le cas contraire, c'est-à-dire lorsque l'électro-aimant 12 est excité et que l'armature mobile 18 se rapproche de l'armature fixe 16 suivant l'axe 11.

Ainsi, la désexcitation de l'électro-aimant 12 provoque, par l'intermédiaire de la tige 22, de la biellette 30, et de la partie menante 36 du dispositif de roue libre, une rotation de l'arbre 38 autour de l'axe 19 par rapport au bâti 10 dans le sens 21 alors que l'excitation de l'électro-aimant ne provoque pas nécessairement une rotation de l'arbre 38 en sens inverse, mais laisse seulement l'arbre 38 libre d'accomplir une telle rotation.

Sur l'arbre 38 est montée une came 42 normalement solidaire de l'arbre 38 à la rotation autour de l'axe 19 par rapport au bâti 10.

Dans l'exemple représenté, la came 42 est fixée sur la périphérie extérieure d'un manchon 44 dont la périphérie intérieure est montée à coulissement suivant l'axe 19 sur la périphérie extérieure de l'arbre 38, le manchon 44 présentant par exemple à une extrémité 46 une ouverture de section polygonale coopérant avec un embout 48 de l'arbre 38, cet embout 48 ayant lui-même une section polygonale correspondant à celle de l'ouverture de l'extrémité 46 du manchon 44; la came 42 est rappelée par un ressort 50, par exemple interposé entre le manchon 44 et un épaulement 23 de l'arbre 38, dans une position où l'extrémité 46 du manchon est en regard de l'embout polygonal 48, si bien que la came 42 et l'arbre 48 sont alors solidarisés à la rotation autour de l'axe 19; on peut cependant repousser le manchon 44 et la came 42 à l'encontre de l'action du ressort 50, et faire venir ainsi l'extrémité 46 du manchon en regard d'un rétreint 52 de l'arbre 38, la came 42 et l'arbre 38 étant alors désolidarisés à la rotation autour de l'axe 19.

Si l'on se réfère plus particulièrement à la fig. 4, on voit que la came 42 montée sur l'arbre 38 présente, dans un quelconque plan de coupe perpendiculaire de l'axe 19, une périphérie dont la forme est celle de deux développantes de cercle 54 et 56 diamétralement opposés, le cercle de base de ces développantes étant centré sur l'axe 19 et les développantes s'étendant dans un plan perpendiculaire à cet axe.

Chacune des surfaces de came définies respectivement par ces développantes de cercle 54 et 56 agit sur un levier respectif 58, 60 par l'intermédiaire d'un galet respectif 52, 64 monté à la rotation sur le levier correspondant, respectivement 58, 60, autour d'un axe approximativement parallèle à l'axe 19, respectivement 66, 68, ce galet étant en contact périphérique avec la surface de came correspondante.

Les deux leviers 58 et 60 représentent un plan moyen commun 25, incluant l'axe 19 et perpendiculaire à l'axe 11, et des moyens sont prévus pour autoriser un mouvement des deux leviers par rapport au bâti 10 sans modification de la position de leur plan moyen commun 25.

On pourrait prévoir à cet effet que chacun des leviers 58 et 60 soit monté à la rotation par rapport au bâti 10 autour d'un axe respectif parallèle à l'axe 11, et fixe par rapport au bâti.

Cependant, selon le mode de réalisation préféré illustré, chacun des leviers 58 et 60 est monté à la rotation autour d'un axe respectif 70, 72, parallèle à l'axe 11, sur une paire de barrettes 73, 74 qui les relient respectivement au-dessus et en dessous du plan moyen 25 et qui sont montées par rapport au bâti 10 à coulissement suivant une direction parallèle à une direction moyenne 27 incluse dans le plan 25 et perpendiculaire à l'axe 19 pour autoriser un jeu conjoint des axes 70 et 72 des deux leviers suivant une telle direction, en les laissant perpendiculaires au plan 25; à cet effet, par exemple, les deux barrettes 73 et 74, disposées respectivement au-dessous et au-dessus des leviers 58 et 60 et articulées respectivement sur l'un et l'autre autour des axes 70 et 72, sont en contact coulissant, entre ces articulations, respectivement par des faces planes 29 et 31 parallèles au plan 25 et tournées l'une vers l'autre, avec des méplats respectifs 33 et 35, parallèles au plan 25, d'une partie 37 du bâti 10; un maintien des barrettes 73 et 74 suivant une direction parallèle à la direction moyenne 27 est assuré par appui coulissant contre des épaulements 39 et 41 disposés transversalement par rapport à l'axe 19 et placés en regard l'une de l'autre, l'épaulement 39 étant aménagé directement sur le bâti 10 et l'épaulement 41 aménagé sur l'arbre 38 immobile à la translation suivant l'axe 19 par rapport au bâti 10.

Les axes 70 et 72 sont décalés par rapport au plan moyen 53 de la came 42, lequel est perpendiculaire à l'axe 19, de telle sorte que le roulement des galets 62 et 64 contre la périphérie de la came 42 lors de la rotation de cette dernière autour de l'axe 19 par rapport au bâti 10 provoque un mouvement de pivotement des deux leviers 58 et 60 autour de leur axe d'articulation respectif 70, 72 sur la paire de barrettes 73, 74.

A l'opposé du galet de contact avec la périphérie de la came 42 par rapport à son axe d'articulation respectif 70, 72, chacun des leviers 58, 60 présente une face d'extrémité, respectivement 43, 45, placée en regard de la face d'extrémité analogue de l'autre levier et placée au contact d'une plaquette respective, 76, 78 présentant un plan moyen approximativement parallèle à la fois à l'axe 11 et à l'axe 19; les deux plaquettes 76 et 78 sont montées coulissantes sur des broches 80 et 82 fixes par rapport au bâti 10 et présentant une direction moyenne respective 47, 49 rectiligne, parallèle à la direction 27; en regard l'une de l'autre, les plaquettes 76 et 78 portent des garnitures de friction respectives 84, 86 destinées, au freinage, à s'appliquer fermement respectivement de part et d'autre d'un disque 51 pour freiner celui-ci par friction.

Cette position de freinage n'est pas illustrée aux figures; elle résulte d'un écartement des galets 62 et 64 l'un par rapport à l'autre sous l'action de la came 42.

Le fonctionnement du frein, lié à ces dispositions connues en elles-mêmes du brevet français précité, est le suivant si l'on considère comme état initial l'état non représenté de serrage du frein.

Dans cet état, correspondant à la désexcitation de l'électro-aimant 12, les rondelles élastiques 24 agissant pour écarter l'armature mobile 18 de l'armature 16 dans les limites autorisées par le collier élastique 13 sollicitent par l'intermédiaire de la tige 22 et de la biellette 30 la roue menante 36 du dispositif de roue libre dans le sens 21 dans lequel elle est solidaire de la roue menée 40 à la rotation autour de l'axe 19 par rapport au bâti 10; par conséquent, l'effort communiqué par l'empilage de rondelles élastiques 24 se transmet à la came 42 via l'arbre 38, et cette came occupe une position angulaire donnée, maintenant entre les galets 62 et 64 des leviers 58 et 60 un écartement maximal, limité exclusivement par l'appui des garnitures de friction 84 et 86 contre le disque 51, vers lequel elles sont repoussées par les extrémités respectives 43 et 45 des leviers 58 et 60; on notera que plus la came 42 tourne dans le sens 21, plus l'écartement relatif des galets 62 et 64 est grand, et plus la distance relative entre les garnitures de friction 84 et 86 tend à se réduire.

Pour desserrer le frein, on excite l'électro-

aimant 12, qui surcompense alors l'action des ressorts 24 et rapproche l'armature mobile 18 de l'armature fixe 16, pour occuper l'état illustré aux figures; ce mouvement de l'armature mobile 18, transmis à la partie menante 36 du dispositif de roue libre par la tige 22 et la biellette 30, se traduit pour cette partie menante par une rotation dans le sens inverse du sens 21 ; en d'autres termes, la partie menante 36 du dispositif de roue libre est sollicitée dans son sens libre, et la partie menée 40 n'est plus sollicitée dans son sens de blocage; par conséquent, aucune force n'est plus exercée du fait de l'électro-aimant 12 sur l'arbre 38, à la came 42 et les leviers 58 et 60 qui, du fait d'une tendance des garnitures de friction 84 et 86 à s'écarter du disque 51 en cessant ainsi le freinage lorsqu'elles ne sont plus sollicitées par les leviers 58 et 60, tendent à s'écarter au niveau de leurs extrémités 43 et 45, et par conséquent à se rapprocher dans leur zone portant les galets 62 et 64 en provoquant ainsi la rotation de la came 42 en sens inverse du sens 21 qu'autorisent le sens du montage du dispositif de roue libre et le sens de sollicitation de la partie menante 36 dans cette phase du fonctionnement du frein; on notera d'ailleurs que les frictions résiduelles de la partie menante 36 de roue libre sur la partie menée 40 aident à faire tourner la came 42 en sens inverse du sens 21.

Conformément à l'invention, il est prévu des moyens tendant à limiter cette rotation de la came 42 dans le sens inverse du sens 21, c'est-à-dire dans un sens correspondant au desserrage du frein.

A cet effet, est prévu sur l'arbre 38 un deuxième dispositif de roue libre, avantageusement utilisé comme palier de montage de l'arbre 38 sur le bâti 10 à la rotation relative autour de l'axe 19.

Ce deuxième dispositif de roue libre comporte une partie menante 55 solidaire de l'arbre 38 et une partie menée 57 solidaire par exemple de la pièce 37 elle-même solidaire du bâti 10.

Le sens de blocage de ce dispositif de roue libre 55-57 est inverse du sens de blocage du dispositif de roue libre 36-40; en d'autres termes, lorsque l'arbre 38 et la partie menante 55 sont entraînés à la rotation autour de l'axe 19 en sens inverse du sens 21, c'est-à-dire dans un sens correspondant au desserrage du frein, la partie menée 57 se solidarise avec eux après qu'ils aient tourné d'un angle déterminé correspondant à l'angle de prise de couple du dispositif de roue libre 55-57, et la partie menée 57 est libre par rapport à la partie menante 55 lorsque, au contraire, cette partie menante et l'arbre 38 sont entraînés à la rotation autour de l'axe 18 dans le sens 21 correspondant au serrage du frein.

Ainsi, lorsqu'en vue de desserrer le frein, on excite l'électro-aimant comme il a été décrit plus haut, la rotation conjointe de la came 42 et de l'arbre 19 en sens inverse du sens 21 par rapport au bâti 10 n'est possible que sur une course angulaire correspondant à la course de prise de couple du dispositif de roue libre 55-57, c'est-à-dire à la course angulaire de la partie menante 55 par rapport à la partie menée 57 correspondant à leur blocage mutuel; cette course angulaire relative de prise de couple du dispositif de roue libre 55-57 correspond à au moins la course de rotation de la came 42 souhaitée pour assurer le desserrage du frein et au plus la course angulaire de la partie menante 36 du premier dispositif de roue libre 36-40 sous l'action de la tige 22 et de la biellette 30 lorsque l'électro-aimant 12 est excité ou désexcité.

Ainsi, lors du desserrage du frein, la came 42 s'arrête de tourner dès la prise de couple du dispositif de roue libre 55-57, même si la tige 22 de l'électro-aimant poursuit sa translation jusqu'à ce que l'armature mobile 18 vienne en contact avec l'armature fixe 16.

Le frein est alors desserré mais la came 42 a accompli une course correspondant à la course angulaire de prise de couple du dispositif de roue libre 55-57.

Lorsqu'on veut à nouveau serrer le frein, on désexcite l'électro-aimant 12, ce qui a pour effet d'animer la tige 22, soumise à l'action des ressorts empilés 24, d'une translation en sens inverse se traduisant par une rotation de la partie menante 36 du dispositif de roue libre 36-40, autour de l'axe 19, dans le sens 21 correspondant au blocage de cette partie menante 36 sur la partie menée 40; ainsi, après accomplissement d'une course angulaire de la partie 36 par rapport à la partie 40 correspondant à l'angle de prise de couple du dispositif de roue libre 36-40, le mouvement de la tige 22 provoque une rotation conjointe des parties menante 36 et menée 40, et par conséquent de l'arbre 38 et de la came 42 dans le sens 21 ; en d'autres termes, la came 42 tourne dans un sens correspondant au serrage du frein, et ceci jusqu'à ce que les garnitures de friction 84 et 86 soient appliquées contre le disque 51, et que l'effort exercé à ce niveau et qui se transmet jusqu'à la tige 22 compense exactement l'action des ressorts empilés 24 sur celle-ci, puisque le dispositif de roue libre 55-57 n'oppose aucun obstacle à une telle rotation.

Lorsque, ensuite, on veut à nouveau desserrer le frein en excitant l'électro-aimant 12, le phénomène précédemment décrit se reproduit et la came 42 ne peut tourner que sur une course angulaire correspondant à la course angulaire relative de prise de couple de la partie menante 55 et de la partie menée 57 du dispositif de roue libre 55-57, même si elle accomplit une course angulaire supérieure en sens inverse à chaque serrage du fait de l'usure des garnitures de friction 84 et 86.

A mesure que les freinages successifs ont lieu et que l'usure se produit, la position de la came 42 correspondant au serrage du frein varie dans le sens horaire si l'on se réfère aux fig. 2 et 4, c'est-à-dire dans le sens 21, et la position de serrage du frein correspond à un écartement de plus en plus grand entre les galets 62 et 64; cependant, la forme en développante de cercle des parties 54 et 56 de la périphérie de la came 42 permet d'associer à un même angle de rotation de la came 42, quelle que soit sa position initiale, un déplacement de même amplitude des leviers 58 et 60.

Dans le sens du desserrage, cette amplitude limitée par la course relative de prise de couple des parties menante 55 et menée 57 du dispositif de roue libre 55-57 est par exemple telle que les garnitures de friction 84 et 86 s'écartent au plus d'un millimètre du disque de frein 51.

Lorsqu'on désire procéder au remplacement des garnitures de friction 84 et 86, on excite l'électro-aimant 12 pour desserrer le frein, on désolidarise la came 42 de l'arbre 38 en poussant le manchon 44 à l'encontre du ressort 50 comme il a été dit plus haut, puis on fait tourner manuellement la came 42 pour l'amener dans une position dans laquelle les galets 62 et 64 sont à un écartement relatif minimal, c'est-à-dire à une position dans laquelle l'écartement des garnitures de friction 84 et 86 est maximal; on démonte alors ces garnitures que l'on remplace par des garnitures neuves, et l'on solidarise à nouveau à la rotation autour de l'axe 19 la came 42 et l'arbre 38 en mettant à nouveau en prise le manchon 44 et la partie polygonale 48 de l'arbre; lorsqu'on effectue ensuite à nouveau les opérations alternées de serrage et de desserrage du frein, l'usure des garnitures se rattrape automatiquement comme il a été décrit plus haut.

Avantageusement, selon un mode de réalisation préféré et comme il est visible notamment aux fig. 1 et 2, un système pneumatique ou mécanique de desserrage du frein peut être prévu pour pallier une déficience éventuelle de l'électro-aimant 12. Ce système peut comprendre par exemple un vérin pneumatique ou hydraulique dont le corps 59 est solidaire du bâti 10 et dont le piston 96 s'appuie contre une queue 98 solidaire de la partie menante 36 du dispositif de roue libre 36-40 pour imprimer à volonté à cette partie menante 36 une rotation en sens inverse du sens 21, c'est-à-dire dans le sens du desserrage du frein, en dépit de l'action des ressorts empilés 24; ce dispositif de secours a été illustré, comme les autres éléments du frein, dans sa position correspondant au desserrage de celui-ci.

Naturellement, de nombreuses modifications peuvent être apportées au dispositif qui vient d'être décrit sans que l'on sorte pour autant du cadre de l'invention.

## Revendications

1. Frein à rattrapage automatique d'usure, du type comportant:

— un bâti (19) de frein,

— au moins une garniture de friction (84, 86) mobile par rapport au bâti (10) dans le sens d'un serrage ou d'un desserrage par rapport à une contrepartie de freinage (51),

— une came (42) mobile à la rotation par rapport au bâti (10) autour d'un axe (9) fixe par rapport à ce dernier, et coopérant avec ladite garniture de friction (84, 86) pour provoquer par rotation dans un premier sens (21) le serrage et par rotation dans le deuxième sens le desserrage, de telle sorte que l'amplitude du mouvement de la garniture de friction (84, 86) soit proportionnelle à l'amplitude du mouvement de rotation de la came (42),

— un dispositif de roue libre (36-40) dont la partie menée (40) est solidaire de la came (42) à la rotation dans un sens et dans l'autre et dont la partie menante (36), bloquée sur la partie menée (40) lorsque la partie menante (36) est entraînée à la rotation par rapport à la partie menée (40) dans ledit premier sens (21) et libre par rapport à la partie menée (40) dans le cas contraire, est relié à des moyens d'actionnement (12, 24) imprimant à la partie menante (36), à volonté, une rotation dans l'un ou l'autre sens autour de l'axe (19) par rapport au bâti (10), avec une course angulaire supérieure à la course angulaire de prise de couple du dispositif de roue libre (36-40), caractérisé en ce que la came (42) est par ailleurs solidaire à la rotation dans un sens et dans l'autre de la partie menante (55) d'un deuxième dispositif de roue libre (55-57) dont la partie menée (57) est fixe par rapport au bâti (10) et dont la partie menante (55) est bloquée sur la roue menée (57) lorsque la partie menante (55) est entraînée à la rotation par rapport à la partie menée (57) dans ledit deuxième sens et libre par rapport à la partie menée (57) dans le cas contraire, et en ce que la course angulaire de la partie menante (55) du deuxième dispositif de roue libre (55-57) par rapport à la partie menée (57) de celui-ci correspondant à la prise de couple correspond à au moins la course de rotation de la came (42) souhaitée pour assurer le desserrage du frein et au plus la course angulaire de la partie menante (36) du premier dispositif de roue libre (36-40) par rapport au bâti (10) lors du fonctionnement des moyens d'actionnement (12, 24).

2. Frein selon la revendication 1, caractérisé en ce que les moyens d'actionnement (12, 24) comportent un dispositif à simple effet agissant sur la partie menante (36) du premier dispositif de roue libre (36, 40) à la rotation dans un sens (sens inverse du sens 21) et des moyens (24) de rappel élastique dans l'autre sens (21).

3. Frein selon la revendication 2, caractérisé en ce que le dispositif à simple effet est un électro-aimant (12).

4. Frein selon l'une des revendications 2 ou 3, caractérisé en ce que le dispositif à simple effet (12) agit sur la partie menante (36) du premier dispositif de roue libre (36-40) dans le sens (inverse du sens 21) correspondant au desserrage du frein.

5. Frein selon l'une des revendications précédentes, caractérisé en ce que la came (42) présente, dans un plan (53) perpendiculaire à l'axe (19), une périphérie comportant deux parties (54, 56) en développante de cercle diamétralement opposées, dont le cercle de base respectif est centré sur l'axe (19), et en ce que chaque partie (54, 56) agit sur un levier respectif (58, 60) portant par ailleurs une garniture de friction respective (84, 86), les deux leviers (58, 60) étant articulés, entre la zone d'action respective (62, 64) de la came (42) et la garniture de friction respective (84, 86), sur des axes (70 et 72) parallèles entre eux et perpendiculaires à une même direction (27) fixe par rapport au bâti (10) et perpendiculaire à l'axe (19) de rotation de la came (42) par rapport à ce bâti (10), les deux axes (70, 72) de pivotement des leviers étant disposés respectivement de part et d'autre de l'axe (19) de rotation de la came (42) par rapport au bâti (10) et à une distance prédéterminée l'un de l'autre.

6. Frein selon la revendication 5, caractérisé en ce que les axes de pivotement (70, 72) des leviers (58, 60) sont portés par des moyens (73, 74) autorisant leur déplacement conjoint suivant ladite direction (27) perpendiculaire à l'axe (19) de rotation de la came (42) par rapport au bâti (10), en conservant leur distance relative.

7. Frein selon l'une des revendications précédentes, caractérisé en ce qu'il est prévu des moyens (44, 46, 48, 50, 52) pour autoriser une désolidarisation à volonté de la came (42), de la partie menée (40) du premier dispositif de roue libre (36-40), et de la partie menante (55) du deuxième dispositif de roue libre (55-57).

## Claims

1. A brake with automatic wear adjustment, of the type having:
– a brake support (10),
– at least one friction lining (84, 86) movable with respect to the support (10) in an application or release direction with respect to a braking counterpart (51),
– a cam (42) movable in rotation with respect to the support (10) about an axis (19) fixed with respect to the latter, and cooperating with the said friction lining (84, 86) for bringing about by rotation in a first direction (21) the application and by rotation in the second direction the release, so that the amplitude of movement of the friction lining (84, 86) is proportional to the amplitude of rotation movement of the cam (42),
– a free wheel device (36-40) of which the driven part (40) is fixed to the cam (42) in rotation in one direction and in the other and of which the driving part (36), locked on the driven part (40) when the driving part (36) is driven in rotation with respect to the driven part (40) in the said first direction (21) and free with respect to the driven part (40) in the contrary case, is connected with actuating means (12, 24) impressing on the driving part (36), at will, a rotation in one or the other direction about the axis (19) with respect to the support (10), with an angular stroke greater than the angular stroke of the coupling point of the free wheel device (36-40), characterised in that the cam (42) is in addition fixed in rotation in one direction and in the other to the driving part (55) of a second free wheel device (55-57) of which the driven part (57) is fixed with respoct to the support (10) and of which the driving part (55) is locked on the driven wheel (57) when the driving part (55) is driven in rotation with respect to the driven part (57) in the said second direction and free with respect to the driven part (57) in the contrary case, and in that the angular stroke of the driving part (55) of the second free wheel device (55-57) with respect to the driven part (57) of this corresponding to the coupling point corresponds to at least the stroke in rotation of the cam (42) desired for ensuring release of the brake and at most to the angular stroke of the driving part (36) of the first free wheel device (36-40) with respect to the support (10) on functioning of the actuating means (12, 24).

2. A brake according to Claim 1, characterised in that the actuating means (12, 24) comprise a single acting device acting on the driving part (36) of the first free wheel device (36, 40) in rotation in one direction (reverse to the direction 21) and resilient return means in the other direction (21).

3. A brake according to Claim 2, characterised in that the single acting device is an electromagnet (12).

4. A brake according to Claim 2 or Claim 3, characterised in that the single acting device (12) acts on the driving part (36) of the first free wheel device (36-40) in the direction (reverse to the direction 21) corresponding to release of the brake.

5. A device according to any one of the preceding claims, characterised in that the cam (42) has, in a plane (53) perpendicular to the axis (19), a periphery having two diametrically opposed parts (54, 56) developing from a circle, of which the respective base circle is centred on the axis (19), and in that each part (54, 56) acts on a respective lever (58, 60) carrying in addition a respective friction lining (84, 86), the two levers (58, 60) being pivoted, between the respective active zone (62, 64) of the cam (42) and the respective friction lining (84, 86), on axes (70 and 72) parallel to each other and perpendicular to the same direction (27) fixed with respect to the support (10) and perpendicular to the axis (19) of rotation of the cam (42) with respect to this support (10), the two pivot axes (70, 72) of the levers being respectively arranged on opposite sides of the axis (19) of rotation of the cam (42) with respect to the support (10) and at a predetermined distance between themselves.

6. A brake according to Claim 5, characterised in that the pivot axis (70, 72) of the levers (58, 60) are carried by means (73, 74) permitting their displacement together in the said direction (27) perpendicular to the axis (19) of rotation of the cam (42) with respect to the support (10), preserving their relative distance.

7. A brake according to any one of the preceding claims, characterised in that it is provided with means (44, 46, 48, 50, 52) for permitting unfixing at will of the cam (42), from the driven part (40) of the first free wheel device (36-40), and from the driving part (55) of the second free wheel device (55-57).

## Patentansprüche

1. Bremse mit automatischer Verschleissnachstellung von der Art mit:
– einem Bremsgehäuse (10),
– mindestens einer relativ zum Gehäuse (10) in Richtung eines Andrückens oder eines Lösens mit Bezug auf einen Brems-Gegenteil (51) beweglichen Reibungsgarnitur (84, 86),
– einer relativ zum Gehäuse (10) um eine gehäusefeste Achse (19) drehbeweglichen Nockenscheibe (42), die mit der genannten Reibungsgarnitur (84, 86) zusammenarbeitet, um durch Drehung in eine erste Richtung (21) das Andrücken und durch Drehung in die zweite Richtung das Lösen derart zu bewirken, dass die Bewegungsamplitude der Reibungsgarnitur (84, 86) proportional der Drehbewegungsamplitude der Nockenscheibe (42) ist,
– einer Freilaufeinrichtung (36-40), deren getriebener Teil (40) mit der Nockenscheibe (42) zur Drehung in beiden Richtungen fest verbunden ist, und deren treibender Teil (36), der auf dem getriebenen Teil (40) blockiert ist, wenn der treibende Teil (36) relativ zum getriebenen Teil (40) in Drehbewegung in die genannte erste Richtung (21) versetzt wird, und der im gegenteiligen Fall mit Bezug auf den getriebenen Teil (40) frei ist, mit Betätigungsmitteln (12, 24) verbunden ist, die gewünschtenfalls den treibenden Teil (36) relativ zum Gehäuse (10) in eine Drehbewegung um die Achse (19) in die eine oder andere Richtung versetzen, wobei der Winkelhub grösser ist als der Winkelhub für die Aufnahme der Momentubertragung der Freilaufeinrichtung (36-40), dadurch gekennzeichnet, dass die Nockenscheibe (42) auch mit dem treibenden Teil (55) einer zweiten Freilaufeinrichtung (55-57) für eine Drehung in beiden Richtungen drehfest verbunden ist, deren getriebener Teil (57) relativ zum Gehäuse (10) fest ist und deren treibender Teil (55) auf dem getriebenen Rad (57) blockiert ist, wenn der treibende Teil (55) relativ zum getriebenen Teil (57) in die genannte zweite Richtung gedreht wird, und der im gegenteiligen Fall frei mit Bezug auf den getriebenen Teil (57) ist, und dass der der Aufnahme der Momentübertragung entsprechende Winkelhub des treibenden Teiles (55) der zweiten Freilaufeinrichtung (55-57) mit Bezug auf ihren getriebenen Teil (57) mindestens dem erwünschten Drehwinkel der Nockenscheibe (42), um das Lösen der Bremse zu gewährleisten, und höchstens dem Winkelhub des treibenden Teiles (36) der ersten Freilaufeinrichtung (36-40) mit Bezug auf das Gehäuse (10) beim Betrieb der Betätigungsmittel (12, 24) entspricht.

2. Bremse nach Anspruch 1, dadurch gekennzeichnet, dass die Betätigungsmittel (12, 24) eine einfachwirkende Einrichtung, die auf den treibenden Teil (36) der ersten Freilaufeinrichtung (36, 40) zu dessen Verdrehung in eine Richtung (entgegengesetzt zur Richtung 21) wirkt, sowie Mittel (24) zum elastischen Rückholen in die andere Richtung (21) aufweisen.

3. Bremse nach Anspruch 2, dadurch gekennzeichnet, dass die einfachwirkende Einrichtung ein Elektromagnet (12) ist.

4. Bremse nach einem der Ansprüche 2 oder 3, dadurch gekennzeichnet, dass die einfachwirkende Einrichtung (12) auf den treibenden Teil (36) der ersten Freilaufeinrichtung (36-40) in der dem Lösen der Bremse entsprechenden (der Richtung 21 entgegengesetzten) Richtung wirkt.

5. Bremse nach einem der vorhergehenden Ansprüche, dadurch gekennzeichnet, dass die Nokkenscheibe (42) in einer zur Achse (19) senkrechten Ebene (53) einen zwei einander diametral gegenüberliegende Kreisevolventen-Teile (54, 56) aufweisenden Umfang aufweist, deren jeweiliger Basiskreis die Mitte auf der Achse (19) hat, und dass jeder Teil (54, 56) auf einen entsprechenden, ferner eine entsprechende Reibungsgarnitur (84, 86) tragenden Hebel (58, 60) wirkt, wobei die beiden Hebel (58, 60) zwischen dem jeweiligen Wirkungsbereich (62, 64) der Nockenscheibe (42) und der jeweiligen Reibungsgarnitur (84, 86) an Achsen (70 und 72) angelenkt sind, die zueinander parallel sind und senkrecht auf eine gleiche mit Bezug auf das Gehäuse (10) und zur Achse (19) der Drehung der Nockenscheibe (42) relativ zum Gehäuse (10) senkrechte Richtung stehen, wobei die beiden Schwenkachsen (70, 72) der Hebel jeweils auf einer Seite der Achse (19) der Drehung der Nockenscheibe (42) relativ zum Gehäuse (10) und in einem vorbestimmten Abstand voneinander angeordnet sind.

6. Bremse nach Anspruch 5, dadurch gekennzeichnet, dass die Schwenkachsen (70, 72) der Hebel (58, 60) von Mitteln (73, 74) getragen sind, die ihre gemeinsame Verstellung entsprechend der genannten zur Achse (19) der Drehung der Nokkenscheibe (42) relativ zum Gehäuse (10) senkrechten Richtung (27) unter Beibehaltung ihres relativen Abstandes erlauben.

7. Bremse nach einem der vorhergehenden Ansprüche, dadurch gekennzeichnet, dass Mittel (44, 46, 48, 50, 52) vorgesehen sind, die auf Wunsch ein Lösen der Nockenscheibe (42) vom getriebenen Teil (40) der ersten Freilaufeinrichtung (36-40) und vom treibenden Teil (55) der zweiten Freilaufeinrichtung (55-57) erlauben.

FIG_1

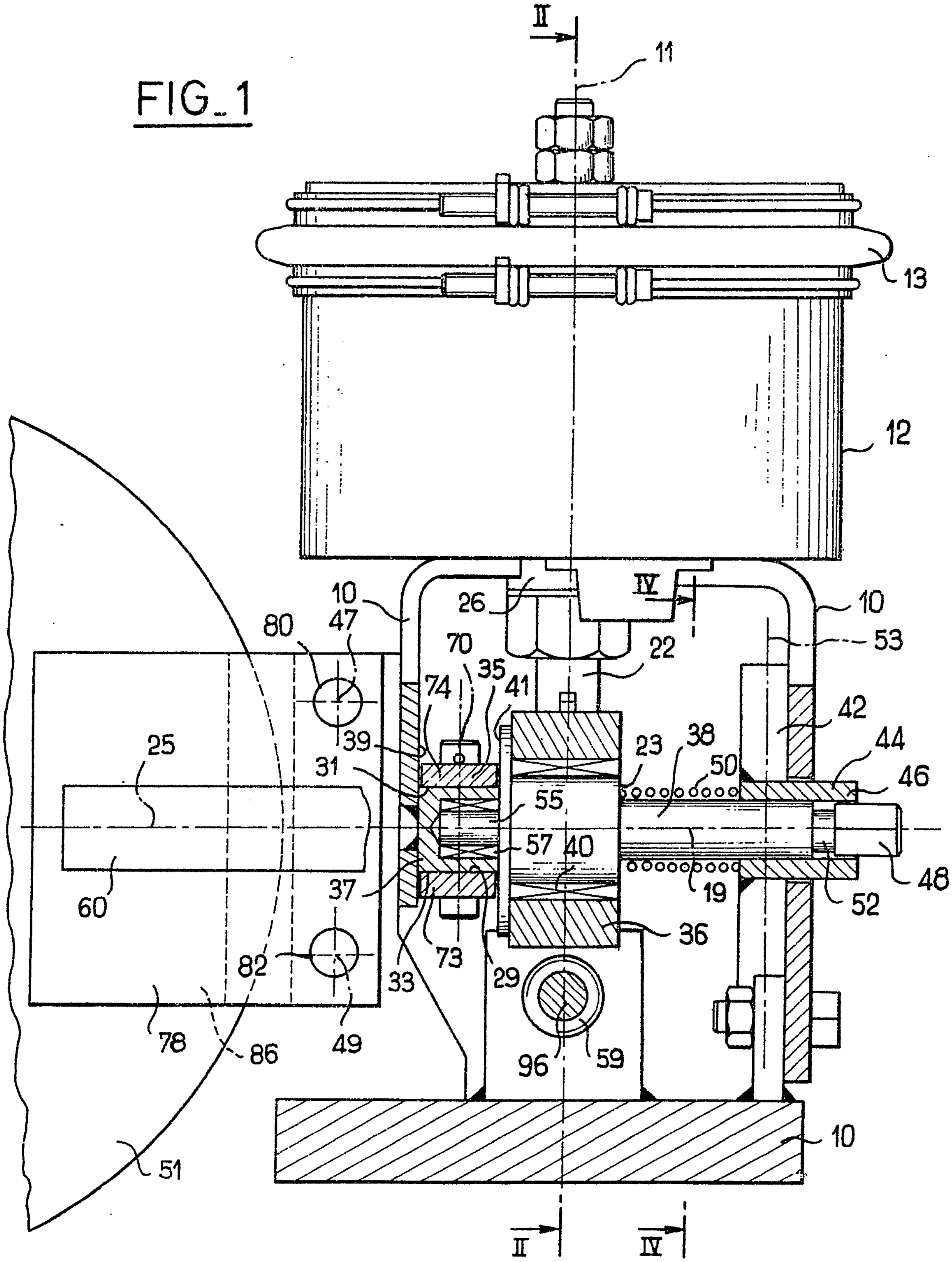
II
11
13
12
10
26
IV
10
53
80
47
70
35
22
41
42
74
39
23
38
50
44
46
25
31
55
57
40
19
48
60
37
52
36
73
29
33
82
49
78
86
96
59
10
51
II
IV

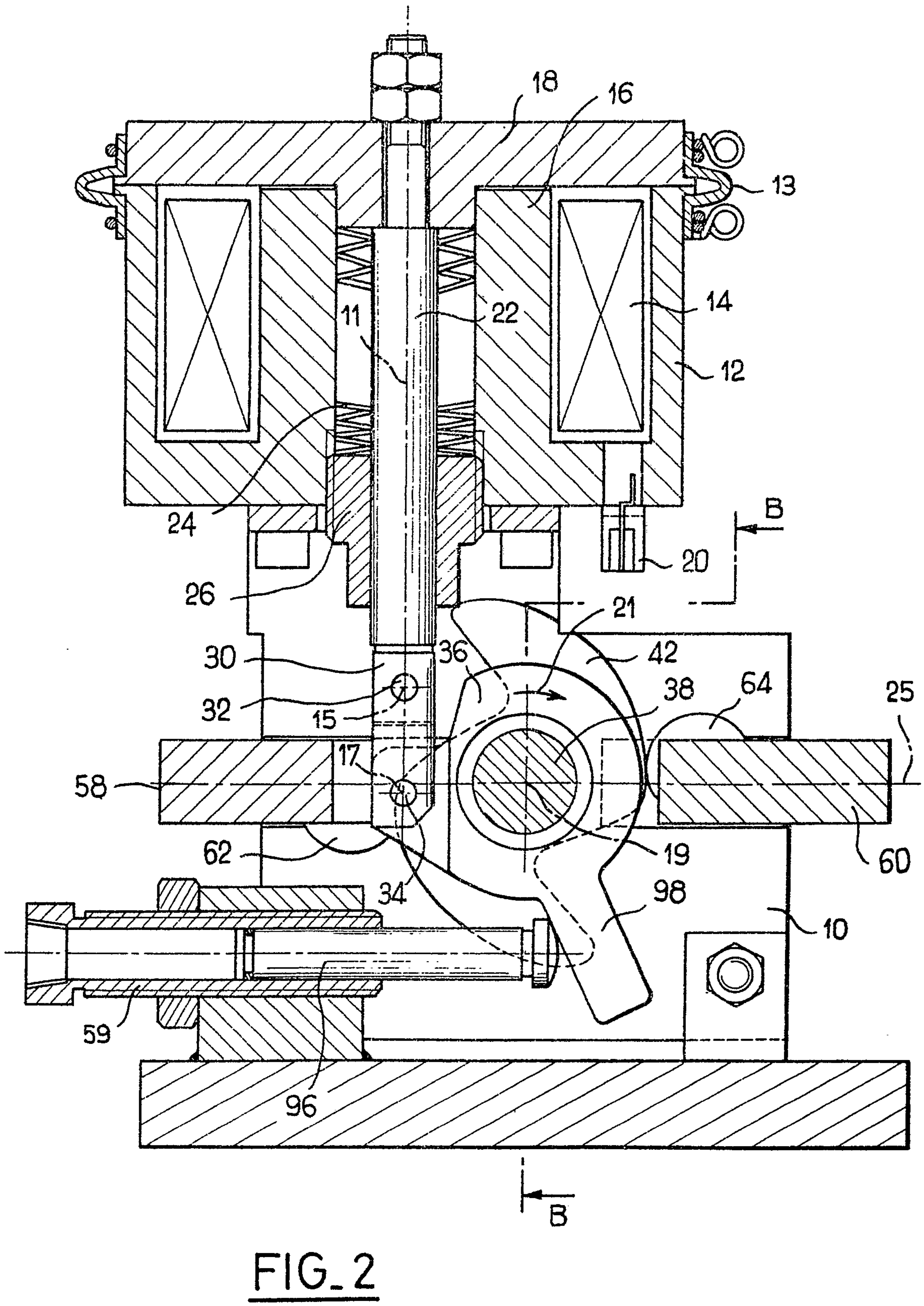
18
16
13
14
12
11
22
24
B
20
26
21
30
36
42
38
64
25
32
15
17
58
19
60
62
34
98
10
59
96
B

FIG_2

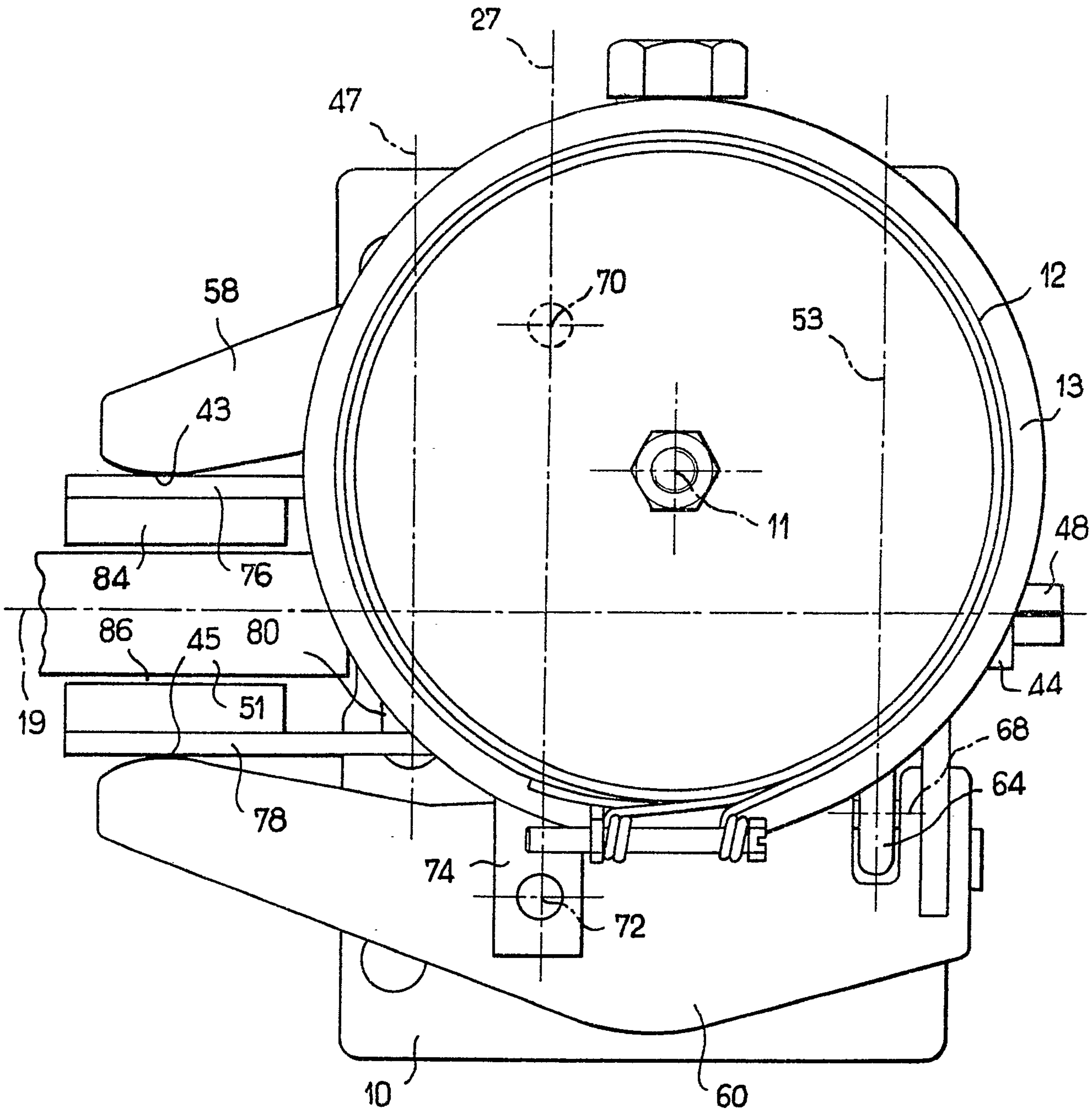
27
47
58
70
12
53
13
43
11
48
84
76
86
45
80
44
19
51
68
64
78
74
72
10
60

FIG_3

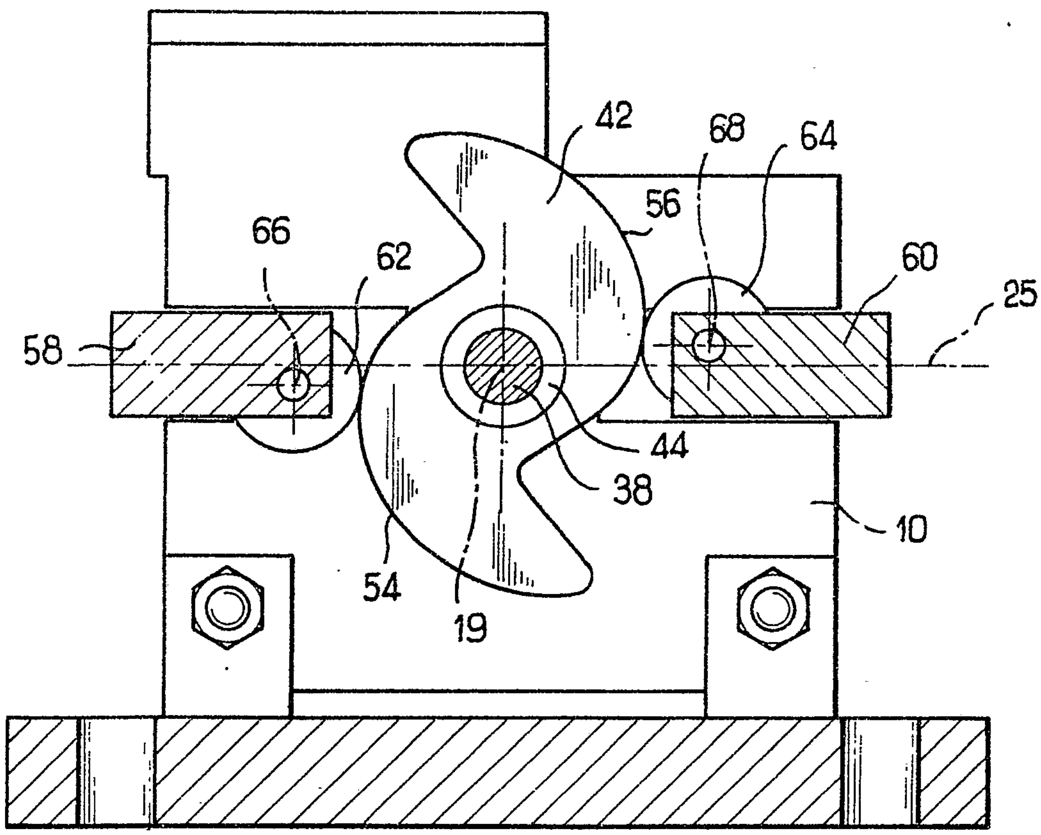


FIG_4